# EUROPÄISCHE PATENTANMELDUNG

(11) **EP 4 542 691 A1**
(43) Veröffentlichungstag der Anmeldung: **23.04.2025**
(21) Anmeldenummer: 24199899.6
(22) Anmeldetag: 12.09.2024
(51) Int. Cl.: H01M 8/04029, H01M 8/04007, F28D 21/00

(54) **BRENNSTOFFZELLENSYSTEM MIT WÄRMEROHR**

(30) Priorität: 13.09.2023 DE 102023124704
(71) Anmelder: Aerostack GmbH, 72581 Dettingen an der Erms (DE)
(72) Erfinder: SCHUDY, Markus, 72581 Dettingen an der Erms (DE); BUNTZ, Marcus-Benedict, 72581 Dettingen an der Erms (DE); ZIEGLER, Christoph, 72581 Dettingen an der Erms (DE)
(74) Vertreter: LKGLOBAL Lorenz & Kopf Patentanwalt Attorney at Law PartG mbB

(57) **Zusammenfassung**

Es ist Brennstoffzellensystem (10) mit einem Zwei-Phasen-Kühlsystem angegeben, aufweisend:
mindestens eine Brennstoffzelle (12) mit einem Kühlmitteleinlass (14) und einem Kühlmittelauslass (16),
einen Sammler (18), wobei der Sammler (18) mit der Brennstoffzelle (12) in Fluidverbindung steht und eingerichtet ist, aus der Brennstoffzelle (12) strömendes Kühlmittel (20) in einer Gasphase in einem ersten Abschnitt (22) und einer flüssigen Phase in einem zweiten Abschnitt (24) zu beinhalten,
einen Kondensator (26), wobei der Kondensator (26) mit dem Sammler (18) in Fluidverbindung steht, und eingerichtet ist, das Kühlmittel zu kondensieren und zu unterkühlen,
wobei zwischen Kühlmitteleinlass (14) und Kühlmittelauslass (16) ein thermisch leitendes Element (28) vorgesehen ist, wobei das thermische leitende Element (28) eingerichtet ist Wärme von Kühlmittelauslass zu Kühlmitteleinlass zu übertragen.

## Beschreibung

### Gebiet der Erfindung

Die vorliegende Beschreibung betrifft allgemein das technische Gebiet der Luftfahrt. Insbesondere betrifft die Beschreibung ein Brennstoffzellensystem mit einer ZweiPhasenkühlung mit einem thermischen Element und ein Luftfahrzeug aufweisend ein derartiges Brennstoffzellensystem.

### Hintergrund der Erfindung

Brennstoffzellen sind eine mögliche Lösung zur Stromerzeugung in Flugzeugantriebssystemen oder die emissionsfreie Bordstromversorgung (APU = Auxiliary Power Unit) ohne unerwünschte Emissionen. Polymer-Elektrolyt-Brennstoffzellen (PEMFC) erzeugen Energie und Strom durch die elektrochemische Reaktion von Wasserstoff und Sauerstoff zu Wasser. Bei dieser Reaktion entsteht zwangsläufig Wärme, die abgeführt werden muss. In kommerziellen Brennstoffzellenstapeln wird dies über eine Flüssigkeitskühlung realisiert.

Eine potenzielle Alternative mit erheblichem Gewichtsreduktionspotenzial auf Systemebene ist der Ersatz der Flüssigkeitskühlung durch eine Zweiphasenkühlung. Hierbei wird die latente Verdampfungswärme genutzt, um große Wärmemengen von den Brennstoffzellen abzuführen. Zusätzlich verbessert der hohe Wärmeübergangskoeffizient im Vergleich zur Einphasenkühlung die Leistung des thermischen Managementsystems. Die Zweiphasenkühlung beruht auf den Phasenübergängen im Verdampfer (Brennstoffzellen) sowie im Wärmetauscher zur Umgebung (Kondensator). Um das Kühlmittel zur Brennstoffzelle pumpen zu können, ist es notwendig, dass das Kühlmittel unterkühlt ist, d.h. sich im flüssigen Zustand befindet (Vermeidung von Kavitation der Pumpe). Unterkühlung bezieht sich dabei auf den Temperaturbereich unterhalb des Siedepunkts des Kühlmittels. Das unterkühlte Kühlmittel gelangt dann in die Brennstoffzelle, wo seine Temperatur erhöht wird, und das Sieden des Kühlmittels einsetzt. Das Vorhandensein dieses steilen Temperaturgefälles in der Einlaufzone kann für die Brennstoffzelle schädlich sein. Zu niedrige Temperaturen in diesem Bereich können zu Kondensation von Wasser in den Gaskanälen (Überflutung) führen. Um dieses und andere Risiken zu bewältigen, wird in der Regel ein Vorwärmer oder Rekuperator vor dem Verdampfer (Brennstoffzelle) eingesetzt. Dieser Vorwärmer/Rekuperator kann jedoch prohibitiv groß sein und die Gewichtsvorteile der Zweiphasenkühlung verringern.

### Zusammenfassung der Erfindung

Es kann als Aufgabe der Erfindung betrachtet werden, ein Brennstoffzellensystem mit reduziertem Gewicht bereitzustellen.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Gemäß einem Aspekt ist ein Brennstoffzellensystem mit einem Zwei-Phasen-Kühlsystem angegeben. Das Brennstoffzellensystem weist mindestens eine Brennstoffzelle mit einem Kühlmitteleinlass und einem Kühlmittelauslass auf. Ferner ist zwischen Kühlmitteleinlass und Kühlmittelauslass ein thermisch leitendes Element vorgesehen, wobei das thermische leitende Element eingerichtet ist Wärme von Kühlmittelauslass zu Kühlmitteleinlass zu übertragen.

Ein Brennstoffzellensystem ist eine technologische Einheit, die aus mehreren Komponenten besteht und zur Umwandlung chemischer Energie in elektrische Energie mittels elektrochemischer Reaktionen dient. Es umfasst in der Regel eine oder mehrere Brennstoffzellen, die als elektrochemische Zellen fungieren und die Hauptkomponente des Systems darstellen. Zusätzlich beinhaltet das System weitere Komponenten wie einen Brennstoffzufuhrmechanismus, einen Oxidationsmittelzufuhrmechanismus, eine Elektrolytlösung, Elektroden, einen Katalysator und eine elektrische Verbindung.

Das Brennstoffzellensystem nutzt eine chemische Reaktion zwischen einem Brennstoff und einem Oxidationsmittel, typischerweise Wasserstoff und Sauerstoff, um elektro-chemisch Strom zu erzeugen. Dabei entsteht Wasser als einziges Produkt, wodurch das Brennstoffzellensystem als umweltfreundliche Energiequelle gilt. Die erzeugte elektrische Energie kann dann zur Versorgung von elektrischen Geräten, Fahrzeugen oder zur Stromerzeugung in verschiedenen Anwendungen genutzt werden.

Ein Zwei-Phasen-Kühlsystem ist eine Kühllösung, die darauf abzielt, große Wärmemengen effizient abzuführen, indem es den Phasenübergang von Flüssigkeit zu Dampf nutzt. Es wird häufig in Situationen eingesetzt, in denen herkömmliche einphasige Kühlsysteme an ihre Grenzen stoßen und nicht ausreichend Wärmeableitung bieten können.

Bei einem Zwei-Phasen-Kühlsystem wird ein Kühlmittel verwendet, das bei geeigneten Temperaturen und Drücken sowohl in flüssiger als auch in gasförmiger Form existieren kann. Das Kühlmittel nimmt Wärme von der zu kühlenden Quelle auf und verdampft, wodurch es von flüssigem Zustand in einen gasförmigen Zustand übergeht. Der entstehende Dampf nimmt dabei große Mengen an Wärme auf.

Der Phasenwechsel von Flüssigkeit zu Dampf ermöglicht eine effektive Wärmeübertragung. Dies führt zu einer verbesserten Kühlleistung und einer effizienteren Wärmeableitung.

Ein Zwei-Phasen-Kühlsystem besteht in der Regel aus einem Verdampfer, in dem das Kühlmittel Wärme aufnimmt und verdampft, und einem Kondensator, in dem der Dampf wieder kondensiert und die Wärme abgibt. Das Kondensat wird dann zurück in den Verdampfer geleitet, um den Kühlkreislauf fortzusetzen.

Diese Art von Kühlsystem wird in verschiedenen Anwendungen eingesetzt, einschließlich der Kühlung von Hochleistungselektronik, Prozessoren, Brennstoffzellen, Motoren und anderen thermisch anspruchsvollen Systemen, bei denen eine effiziente Wärmeableitung von großer Bedeutung ist.

Ein Kondensator im Sinne der Erfindung ist ein Bauteil oder eine Vorrichtung, die dazu dient, Dampf oder Gas in eine flüssige Phase zu kondensieren. Der Kondensator ist in Fluidverbindung mit dem Sammler, was bedeutet, dass das Kühlmittel zwischen beiden Komponenten zirkulieren kann.

Die Hauptfunktion des Kondensators besteht darin, das Kühlmittel zu kondensieren, indem es Wärme abgibt und somit von einem gasförmigen Zustand in einen flüssigen Zustand übergeht. Dieser Prozess erfolgt in der Regel durch Abkühlung des Dampfes oder Gases, indem es über den Kondensator mit einem Medium in Kontakt gebracht wird, das eine niedrigere Temperatur hat. Diese Abkühlung bewirkt, dass sich die Moleküle des Dampfes oder Gases zusammenziehen und kondensieren, wodurch sie in flüssiger Form gesammelt werden.

Darüber hinaus ist der Kondensator so eingerichtet, dass er das Kühlmittel unterkühlen kann. Unterkühlung bedeutet, dass die Temperatur des kondensierten Kühlmittels unterhalb seines Sättigungspunktes liegt, also unterhalb der Temperatur, bei der es normalerweise kondensieren würde. Dies ermöglicht es dem Kühlmittel, mehr Wärme aufzunehmen, bevor es erneut verdampft oder weitergeleitet wird. Die Unterkühlung ist wichtig, um Kavitation zu vermeiden und sicherzustellen, dass das Kühlmittel seine Kondensationsform beibehält.

Ein thermisch leitendes Element zwischen dem Kühlmitteleinlass und dem Kühlmittelauslass ist eine Komponente, die dazu dient, Wärme von einem heißeren Punkt im Kühlkreislauf zu einem kälteren zu übertragen. Hier sind die Definition und die Vorteile dieser Konfiguration:
Das thermisch leitende Element ist eine Verbindung oder Struktur, die eine gute Wärmeleitfähigkeit aufweist und zwischen dem Kühlmitteleinlass und dem Kühlmittelauslass angebracht ist. Es kann beispielsweise aus einem Material wie Metall oder einem thermisch leitenden Kunststoff bestehen.

Der Hauptvorteil eines thermisch leitenden Elements zwischen dem Kühlmitteleinlass und dem Kühlmittelauslass besteht in der effizienten Wärmeübertragung. Durch die Verwendung eines thermisch leitenden Elements kann die im Kühlmittelauslass vorhandene Wärme effektiv auf den Kühlmitteleinlass übertragen werden. Dadurch wird die Wärmeabfuhr verbessert und die Temperatur im Kühlkreislauf stabilisiert, indem die Kühlflüssigkeit vorgewärmt wird.

Ein weiterer Vorteil besteht in der Reduzierung von Wärmeverlusten. Durch die Verwendung eines thermisch leitenden Elements wird die Wärme direkt von einem Punkt zum anderen übertragen, ohne dass sie unnötig verloren geht. Dadurch wird die Effizienz des Kühlkreislaufs erhöht und der Energieverbrauch reduziert.

Eine weitere positive Auswirkung dieser Konfiguration ist die Verbesserung der Temperaturverteilung im System. Durch die effiziente Wärmeübertragung zwischen dem Kühlmitteleinlass und dem Kühlmittelauslass wird eine gleichmäßigere Verteilung der Temperaturen im Kühlkreislauf erreicht. Dadurch werden Hotspots vermieden und eine bessere Kühlung der relevanten Komponenten gewährleistet.

Darüber hinaus ermöglicht ein thermisch leitendes Element zwischen dem Kühlmitteleinlass und dem Kühlmittelauslass eine präzisere Steuerung der Systemtemperatur. Durch die gezielte Wärmeübertragung kann die Temperatur an den gewünschten Stellen durch die Eigenschaft des thermisch leitenden Elements als passives Element selbst reguliert und optimiert werden. Dies ist besonders vorteilhaft in Situationen, in denen eine genaue Temperatursteuerung erforderlich ist, um den Betrieb des Systems zu optimieren.

Zusammenfassend bietet die Verwendung eines thermisch leitenden Elements zwischen dem Kühlmitteleinlass und dem Kühlmittelauslass eine effiziente Wärmeübertragung, die Reduzierung von Wärmeverlusten, eine verbesserte Temperaturverteilung und präzise passive Temperaturregelung. Dadurch kann die Leistung und Zuverlässigkeit des Kühlkreislaufs verbessert werden, was zu einer stabilen Betriebsumgebung und einer längeren Lebensdauer der beteiligten Komponenten führt.

Gemäß einer Ausführungsform weist das thermisch leitende Element Kupfer auf.

Ein Vorteil der Verwendung von Kupfer als thermisch leitendes Element zwischen dem Kühlmitteleinlass und dem Kühlmittelauslass liegt in seiner hohen Wärmeleitfähigkeit. Kupfer ist ein ausgezeichneter Wärmeleiter und ermöglicht somit eine effiziente Übertragung von Wärmeenergie von einem Punkt zum anderen. Dadurch kann das thermisch leitende Element dazu beitragen, die Wärmeabfuhr zu verbessern und die thermische Stabilität des Systems zu gewährleisten. Darüber hinaus ist Kupfer ein robustes und langlebiges Material, das sich gut für den Einsatz in Kühlungssystemen eignet. Es ist beständig gegen Korrosion, was zu einer langen Lebensdauer des thermisch leitenden Elements führt. Die Verwendung von Kupfer kann somit die Effizienz und Zuverlässigkeit des Kühlsystems verbessern und zu einer effektiven Wärmeableitung beitragen.

Gemäß einer Ausführungsform weist das thermisch leitende Element Aluminium auf.

Ein Vorteil der Verwendung von Aluminium als thermisch leitendes Element zwischen dem Kühlmitteleinlass und dem Kühlmittelauslass liegt in seiner guten Wärmeleitfähigkeit. Aluminium ist ein effizienter Wärmeleiter und ermöglicht eine effektive Übertragung von Wärmeenergie von einem Punkt zum anderen. Dadurch kann das thermisch leitende Element dazu beitragen, die Wärmeabfuhr zu verbessern und eine optimale Betriebstemperatur des Systems aufrechtzuerhalten.

Ein weiterer Vorteil von Aluminium ist seine geringe Dichte im Vergleich zu Kupfer. Dadurch trägt die Verwendung von Aluminium als thermisch leitendes Element zu einer Gewichtsreduktion des gesamten Systems bei. Dies kann insbesondere in Anwendungen von Vorteil sein, bei denen eine hohe Mobilität oder Gewichtsersparnis erforderlich ist, wie beispielsweise in der Luft- und Raumfahrt oder im Fahrzeugbau.

Darüber hinaus ist Aluminium korrosionsbeständig, was zu einer langen Lebensdauer des thermisch leitenden Elements führt. Es ist auch preisgünstiger als Kupfer, was zu kosteneffektiven Lösungen führen kann.

Die Verwendung von Aluminium als thermisch leitendes Element kann somit die Effizienz des Kühlsystems verbessern, Gewichtseinsparungen ermöglichen und zu einer zuverlässigen Wärmeableitung beitragen.

Gemäß einer Ausführungsform weist das thermisch leitende Element einen Metall-Faserverbund auf.

Ein Vorteil der Verwendung eines Metall-Faserverbundes als thermisch leitendes Element zwischen dem Kühlmitteleinlass und dem Kühlmittelauslass liegt in seiner Kombination aus hoher Festigkeit und guter Wärmeleitfähigkeit. Der Metall-Faserverbund besteht aus einer Matrix aus Metall, die mit eingebetteten Fasern verstärkt ist. Dies führt zu einer verbesserten mechanischen Stabilität und Steifigkeit des thermisch leitenden Elements.

Durch die Verwendung eines Metall-Faserverbundes kann eine effiziente Wärmeübertragung zwischen dem Kühlmittelauslass und dem Kühlmitteleinlass gewährleistet werden. Die Fasern im Verbundmaterial dienen als Wärmeleitkanäle und ermöglichen eine schnelle und gleichmäßige Verteilung der Wärmeenergie. Gleichzeitig bietet das Metall in der Matrix eine hohe Wärmeleitfähigkeit, um die Wärme effektiv abzuführen.

Ein weiterer Vorteil eines Metall-Faserverbundes ist seine geringe Dichte im Vergleich zu reinem Metall. Dadurch trägt die Verwendung dieses Verbundmaterials zu einer Gewichtsreduktion des Systems bei, was besonders in Anwendungen von Vorteil ist, bei denen eine hohe Mobilität oder Gewichtseinsparungen erforderlich sind.

Der Metall-Faserverbund ist auch korrosionsbeständig und kann eine hohe mechanische Belastbarkeit aufweisen, was zu einer langen Lebensdauer des thermisch leitenden Elements führt.

Die Verwendung eines Metall-Faserverbundes als thermisch leitendes Element ermöglicht somit eine effiziente Wärmeübertragung, Gewichtseinsparungen und eine verbesserte mechanische Stabilität des Systems.

Gemäß einer Ausführungsform weist das thermisch leitende Element Rippen auf. Ein Vorteil der Verwendung eines thermisch leitenden Elements mit Rippen zwischen dem Kühlmitteleinlass und dem Kühlmittelauslass liegt in der erhöhten Oberfläche, die für die Wärmeübertragung zur Verfügung steht. Die Rippen dienen dazu, die Kontaktfläche zwischen dem Element und dem Kühlmedium zu vergrößern, was zu einer effizienteren Wärmeabfuhr führt.

Durch die Anordnung von Rippen auf dem thermisch leitenden Element wird die Wärmeenergie effektiver von der einen Seite (Kühlmittelauslass) zur anderen Seite (Kühlmitteleinlass) übertragen. Die Rippen erhöhen die Wärmeleitfähigkeit des Elements und verbessern den Wärmeaustausch mit dem umgebenden Medium, sei es Luft oder Flüssigkeit.

Ein weiterer Vorteil von Rippen auf dem thermisch leitenden Element ist die Verbesserung der Strömungsdynamik des Kühlmediums. Durch die Rippen entstehen Kanäle oder Wirbel, die eine bessere Durchmischung des Kühlmittels ermöglichen und somit die Wärmeübertragungseffizienz weiter steigern.

Die Verwendung von Rippen auf dem thermisch leitenden Element führt zu einer besseren Kühlleistung und einer effektiveren Wärmeabfuhr. Dadurch kann die Temperatur des Systems besser reguliert werden, was die Leistung und Lebensdauer der Komponenten verbessert.

Darüber hinaus ermöglichen Rippen auf dem thermisch leitenden Element eine kompaktere Bauweise des Systems, da sie die Oberfläche zur Wärmeübertragung vergrößern, ohne dass zusätzliche externe Kühlkörper oder Wärmetauscher erforderlich sind.

Insgesamt bieten Rippen auf dem thermisch leitenden Element eine verbesserte Wärmeübertragung, eine effizientere Kühlleistung, eine kompaktere Bauweise und eine bessere Temperaturregelung des Systems.

Gemäß einer Ausführungsform ist das thermisch leitende Element ein Wärmerohr.

Ein Vorteil der Verwendung eines thermisch leitenden Elements in Form eines Wärmerohrs zwischen dem Kühlmitteleinlass und dem Kühlmittelauslass liegt in der effizienten Wärmeübertragung und der verbesserten Temperaturregelung.

Ein Wärmerohr besteht aus einem geschlossenen Rohr mit einer speziellen Wärmeträgerflüssigkeit im Inneren. Wenn Wärme an einem Ende des Wärmerohrs angelegt wird, verdampft die Flüssigkeit und bildet Dampf. Dieser Dampf wandert im Rohr aufgrund des Temperaturunterschieds zu einer kühleren Stelle und kondensiert dort. Dabei gibt der kondensierte Dampf die Wärme ab und wird wieder zu Flüssigkeit, die durch die Kapillarkräften an den Innenwänden des Wärmerohrs zurück zum heißen Ende transportiert wird.

Der Einsatz eines Wärmerohrs als thermisch leitendes Element ermöglicht eine sehr effiziente Wärmeübertragung aufgrund des Phasenwechsels der
Wärmeträgerflüssigkeit. Dadurch kann Wärme schnell und effektiv von der heißesten Stelle (Kühlmittelauslass) zur kühlsten Stelle (Kühlmitteleinlass) transportiert werden.

Darüber hinaus bietet ein Wärmerohr eine gleichmäßige Verteilung der Wärme über seine gesamte Länge. Dadurch wird eine gleichmäßige Kühlung der Komponenten im System gewährleistet und Hotspots können vermieden werden.

Ein Wärmerohr ist auch flexibel und kann in verschiedenen räumlichen Konfigurationen eingesetzt werden. Dadurch kann es an die spezifischen Anforderungen des Brennstoffzellensystems angepasst werden, um eine optimale Wärmeübertragung und Temperaturregelung zu erreichen.

Insgesamt ermöglicht der Einsatz eines Wärmerohrs als thermisch leitendes Element eine effiziente Wärmeübertragung, eine gleichmäßige Kühlung und eine verbesserte Temperaturregelung im Brennstoffzellensystem.

Gemäß einer Ausführungsform umfasst das Kühlmittel Methanol und/oder Ethanol.

Methanol und Ethanol bieten als Kühlmittel verschiedene Vorteile. Sie haben einen niedrigeren Siedepunkt, wodurch sie bei höheren Temperaturen verdampfen können und somit eine bessere Kühlung ermöglichen.

Ein weiterer Vorteil liegt in der geringen Viskosität von Methanol im Vergleich zu Wasser. Dadurch wird der Durchfluss erleichtert und der Energieverbrauch der Pumpe verringert.

Ferner weisen Methanol und Ethanol eine hohe Verdampfungsenthalpie auf. Dadurch können sehr kleine Massenströme im System realisiert werden, wodurch Druckverlust reduziert wird. Dadurch können Leitungen und Pumpen kleiner dimensioniert werden als mit der Flüssigkeitskühlung, was zu einer Einsparung des Gewichts im System führt.

Gemäß einer Ausführungsform ist die eine Brennstoffzelle ein Brennstoffzellenstapel mit mindestens einer Grundplatte, und die Grundplatte weist das thermische leitende Element auf.

Gemäß einem Aspekt umfasst ein Luftfahrzeug ein Brennstoffzellensystem der genannten Bauart.

Gemäß einer Ausführungsform weist das Brennstoffzellensystem ferner einen Ejektor auf, wobei der Ejektor mit dem ersten Abschnitt des Sammlers, dem zweiten Abschnitt des Sammlers, der Pumpe, dem Kondensator und der Brennstoffzelle in Fluidverbindung steht und eingerichtet ist, das Kühlmittel in der Gasphase aus dem Sammler mit dem unterkühlten Kühlmittel aus dem Kondensator zu vermengen und der Brennstoffzelle zuzuführen.

Die Hauptfunktion des Ejektors besteht darin, das Kühlmittel in der Gasphase aus dem ersten Abschnitt des Sammlers mit dem unterkühlten Kühlmittel aus dem Kondensator zu vermengen und anschließend der Brennstoffzelle zuzuführen. Der Ejektor nutzt den Druckunterschied zwischen den beiden Fluiden, um das Kühlmittel in der Gasphase anzusaugen und mit dem unterkühlten Kühlmittel zu vermischen.

Der Ejektor spielt eine entscheidende Rolle bei der Vermengung und Zuführung des Kühlmittels in der Gasphase mit dem unterkühlten Kühlmittel im System. Er ermöglicht eine effiziente Nutzung der vorhandenen Druckdifferenz und gewährleistet eine gleichmäßige Verteilung des Kühlmittels zur Kühlung der Brennstoffzelle.

Ein weiterer Vorteil besteht in der Bildung von Gasblasen im Kühlmittelsystem welche vorteilhaft sind, um Siedeverzug des Kühlmittels entgegenzuwirken. Sie helfen dabei, die Oberflächenspannung zu verringern, was zu einem effektiveren Wärmeaustausch bei höheren Temperaturen führt.

Gemäß einer Ausführungsform weist das Brennstoffzellensystem ferner eine Bypass-Leitung aufweisend eine Pumpe auf, wobei der Kühlmitteleingang über die Bypass-Leitung mit dem Kühlmittelausgang in Fluidverbindung steht.

Die Bypass-Leitung ermöglicht es, eine gezielte Umgehung des normalen Kühlkreislaufs zu erreichen und das warme Kühlmedium direkt zum kalten Kühlmedium zu leiten.

Dadurch kann eine schnelle und effiziente Wärmeübertragung ermöglicht werden, um die Temperatur des Kühlmediums effektiv zu senken. Die Bypass-Leitung kann in verschiedenen Anwendungen eingesetzt werden, um eine gezielte Kühlung oder eine spezielle Temperaturregelung zu ermöglichen und einen

Vorwärmer/Rekuperator verzichtbar zu machen.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig. 1**: eine Brennstoffzellensystem;
- **Fig. 2**: ein Luftfahrzeug.

### Detaillierte Beschreibung von Ausführungsbeispielen

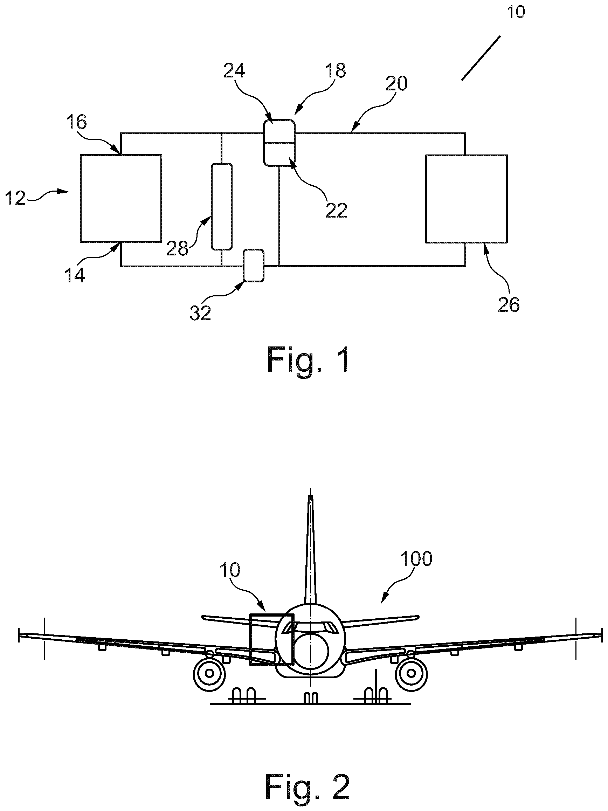

Fig. 1 zeigt ein Brennstoffzellensystem 10 mit einem Zwei-Phasen-Kühlsystem. Das System 10 umfasst mindestens eine Brennstoffzelle 12, die einen Kühlmitteleinlass 14 und einen Kühlmittelauslass 16 hat. Eine Verbindung zwischen dem Kühlmitteleinlass und dem Kühlmittelauslass ermöglicht den Fluss des Kühlmittels.

Das System 10 beinhaltet auch einen Sammler 18, der mit der Brennstoffzelle 12 in Flüssigkeitsverbindung steht. Der Sammler ist so konstruiert, dass er das aus der Brennstoffzelle strömende Kühlmittel aufnimmt. Dabei wird das Kühlmittel im ersten Abschnitt des Sammlers 22 in einer Gasphase gehalten, während es im zweiten Abschnitt 24 in flüssiger Phase vorliegt.

Zusätzlich gibt es einen Kondensator 26, der mit dem Sammler 18 in Flüssigkeitsverbindung steht. Der Kondensator 26 kondensiert und unterkühlt das Kühlmittel, um Kavitation der Kühlmittelpumpe zu verhindern.

Zwischen Kühlmitteleinlass 14 und Kühlmittelauslass 16 ist ein thermisch leitendes Element 28 vorgesehen, wobei das thermische leitende Element 28 eingerichtet ist Wärme von Kühlmittelauslass 16 zu Kühlmitteleinlass 14 zu übertragen.

Fig. 2 zeigt ein Luftfahrzeug 100 mit einem beschriebenen Brennstoffzellensystem 10.

Eine positive Auswirkung dieser Konfiguration ist die Verbesserung der Temperaturverteilung im Brennstoffzellensystem 10. Durch die effiziente Wärmeübertragung zwischen dem Kühlmitteleinlass 14 und dem Kühlmittelauslass 16 wird eine gleichmäßigere Verteilung der Temperaturen im Kühlkreislauf erreicht. Dadurch wird die Unterkühlung am Eintritt reduziert indem die Kühlflüssigkeit 20 über das thermische Element 28 erwärmt wird. Hierdurch kann auf einen Vorwärmer/Rekuperator verzichtet werden, was zu vorteilhaften Gewichtseinsparungen führt.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Brennstoffzellensystem
- 12: Brennstoffzelle
- 14: Kühlmitteleinlass
- 16: Kühlmittelauslass
- 18: Sammler
- 20: Kühlmittel
- 22: erster Abschnitt
- 24: zweiter Abschnitt
- 26: Kondensator
- 28: thermisches Element
- 32: Pumpe
- 100: Luftfahrzeug

## Patentansprüche

1. Brennstoffzellensystem (10) mit einem Zwei-Phasen-Kühlsystem, aufweisend:
mindestens eine Brennstoffzelle (12) mit einem Kühlmitteleinlass (14) und
einem Kühlmittelauslass (16),
einen Kondensator (26), wobei der Kondensator (26) eingerichtet ist, das Kühlmittel zu kondensieren und zu unterkühlen,
wobei zwischen Kühlmitteleinlass (14) und Kühlmittelauslass (16) ein thermisch leitendes Element (28) vorgesehen ist, wobei das thermische leitende Element (28) eingerichtet ist Wärme von Kühlmittelauslass (16) zu Kühlmitteleinlass (14) zu übertragen.

2. Brennstoffzellensystem (10) nach Anspruch 1, ferner aufweisend:
einen Sammler (18), wobei im Sammler (18) eine Phasentrennung in Gas- und
Flüssigphase stattfindet, wobei der Sammler (18) mit der Brennstoffzelle (12) in Fluidverbindung steht und eingerichtet ist, aus der Brennstoffzelle strömendes Kühlmittel (20) in einer flüssigen Phase in einem ersten Abschnitt (22) und einer Gasphase in einem zweiten Abschnitt (24) zu beinhalten.

3. Brennstoffzellensystem (10) nach einem der vorhergehenden Ansprüche, wobei das thermisch leitende Element (28) Kupfer aufweist.

4. Brennstoffzellensystem (10) nach einem der vorhergehenden Ansprüche, wobei das thermisch leitende Element (28) Aluminium aufweist.

5. Brennstoffzellensystem (10) nach einem der vorhergehenden Ansprüche, wobei das thermisch leitende Element (28) einen Metall-Faserverbund aufweist.

6. Brennstoffzellensystem (10) nach einem der vorhergehenden Ansprüche, wobei das thermisch leitende Element (28) Rippen aufweist.

7. Brennstoffzellensystem (10) nach einem der vorhergehenden Ansprüche, wobei das thermisch leitende Element (28) ein Wärmerohr ist.

8. Brennstoffzellensystem (10) nach einem der vorhergehenden Ansprüche, wobei die mindestens eine Brennstoffzelle (12) ein Brennstoffzellenstapel mit mindestens einer Grundplatte ist, und die Grundplatte das thermische leitende Element (28) aufweist.

9. Brennstoffzellensystem (10) nach einem der vorhergehenden Ansprüche, wobei die mindestens eine Brennstoffzelle (12) ein Brennstoffzellenstapel mit einem Medienmodul ist, wobei das Medienmodul das thermische leitende Element (28) umfasst.

10. Brennstoffzellensystem (10) nach einem der vorhergehenden Ansprüche, wobei das Kühlmittel (20) Methanol und/oder Ethanol umfasst.

11. Luftfahrzeug (100) mit einem Brennstoffzellensystem (10) nach einem der vorhergehenden Ansprüche.
